# EUROPEAN PATENT APPLICATION

(11) **EP 4 502 789 A1**
(43) Date of publication of application: **05.02.2025**
(21) Application number: 23842208.3
(22) Date of filing: 14.07.2023
(51) Int. Cl.: G06F 9/44

(54) **DISPLAY METHOD AND ELECTRONIC DEVICE**

(30) Priority: 20.07.2022 CN 202210858818
(71) Applicant: Huawei Technologies Co., Ltd., Shenzhen, Guangdong 518129 (CN)
(72) Inventor: CHENG, Yiyi, Shenzhen, Guangdong 518129 (CN); WANG, Bo, Shenzhen, Guangdong 518129 (CN)
(74) Representative: Grünecker Patent- und Rechtsanwälte PartG mbB
(86) International application number: PCT/CN2023/107349
(87) International publication number: WO 2024/017145

(57) **Abstract**

Embodiments of this application provide a display method and an electronic device. The display method includes: in response to a screen splitting operation of a user, splitting a screen of the electronic device into at least two windows, where the at least two windows include a first window and a second window, and at least one application in a first application running in the first window and a second application running in the second window uses an immersive status bar; determining a first color based on the first application, and determining a second color based on the second application; and displaying a status bar icon within a range of a first area based on the first color, and displaying a status bar icon within a range of a second area based on the second color, where the first area is an area for displaying a status bar in the first window, and the second area is an area for displaying a status bar in the second window. According to the display method and the electronic device provided in embodiments of this application, an icon on an immersive status bar of the electronic device can be clearly visible in a multi-window scenario, thereby improving user experience.

## Description

This application claims priority to Chinese Patent Application No. 202210858818.1, filed with the China National Intellectual Property Administration on July 20, 2022 and entitled "DISPLAY METHOD AND ELECTRONIC DEVICE", which is incorporated herein by reference in its entirety.

### TECHNICAL FIELD

Embodiments of this application relate to the field of computer application technologies, and more specifically, to a display method and an electronic device.

### BACKGROUND

With development of electronic devices, devices such as mobile phones, tablet computers, personal computers, and in-vehicle displays are widely used in scenarios such as home entertainment and school office. Users have increasing requirements for using an electronic device to perform multi-task processing, to improve a processing speed.

The electronic device meets a multi-window processing requirement of a consumer in a manner like screen splitting. For example, one application is displayed in different windows of the electronic device, or different applications are displayed in different windows of the electronic device, so that the user can simultaneously process a plurality of tasks by using one electronic device. This improves user experience.

However, when one electronic device is used to process tasks in a plurality of windows, a color of a status bar icon is set according to a focus window, and a status bar icon may be unclear in a window that uses an immersive status bar.

### SUMMARY

Embodiments of this application provide a display method and an electronic device, so that an immersive status bar can be clearly displayed in a multi-window scenario.

According to a first aspect, a display method is provided. The method is executed by an electronic device, and includes: in response to a screen splitting operation of a user, splitting a screen of the electronic device into at least two windows, where the at least two windows include a first window and a second window, and at least one application in a first application running in the first window and a second application running in the second window uses an immersive status bar; determining a first color based on the first application, and determining a second color based on the second application; and displaying a status bar icon within a range of a first area based on the first color, and displaying a status bar icon within a range of a second area based on the second color, where the first area is an area for displaying a status bar in the first window, and the second area is an area for displaying a status bar in the second window.

In this embodiment, the electronic device splits the screen of the electronic device into the at least two windows in response to the user operation, where the at least one application corresponding to the first window and the second window in the at least two windows uses the immersive status bar. The electronic device determines the first color and the second color based on the applications in the two windows, and then displays the status bar icon within the range of the first area and the status bar icon within the range of the second area based on the determined first color and second color, where the first area and the second area are areas corresponding to status bars in the first window and the second window respectively. Therefore, in a split-screen mode, the electronic device can adjust, based on a display interface of an immersive status bar in each window, a color of a status bar icon in each window, to enable the status bar icon to be clearly visible, thereby improving user experience.

With reference to the first aspect, in some implementations of the first aspect, the determining a first color based on the first application includes: determining the first color based on a background color of the first application in the first area, where a difference between the background color of the first application in the first area and the first color is greater than a first preset threshold; or determining the first color based on a color that is of the status bar icon and that is preset for the first application; and the determining a second color based on the second application includes: determining the second color based on a background color of the second application in the second area, where a difference between the background color of the second application in the second area and the second color is greater than the first preset threshold; or determining the second color based on a color that is of the status bar icon and that is preset for the second application.

In this embodiment, the electronic device may preset the first color and the second color based on the applications in the two windows or determine the first color and the second color based on the background colors of the applications. Specifically, when the colors of the status bar icons are preset for both the first application and the second application, the first color and the second color may be determined based on the preset colors of the status bar icons. When the colors of the status bar icons are not preset for the first application and the second application, and when the immersive status bar is preset in the two windows or is forcibly set by an operating system of the electronic device, the first color and the second color may be determined based on the background colors, in a status bar area, of the applications in the two windows. When the immersive status bar is preset for the application in only one of the two windows or is forcibly set by the operating system of the electronic device, for the first window that uses the immersive status bar, the first color may be determined based on the background color, in the status bar area, of the application corresponding to the first window, and for the second window that does not use the immersive status bar, the second color may be determined by the system.

With reference to the first aspect, in some implementations of the first aspect, the method further includes: determining whether a first grayscale corresponding to the first color and a second grayscale corresponding to the second color are greater than a second preset threshold; and displaying a color of the status bar icon within the range of the first area based on the first color, and displaying a color of the status bar icon within the range of the second area based on the second color includes: when the first grayscale or the second grayscale is greater than the second preset threshold, displaying the color of the status bar icon within the range of the first area or the status bar icon within the range of the second area as white; and when the first grayscale or the second grayscale is less than the second preset threshold, displaying the color of the status bar icon within the range of the first area or the status bar icon within the range of the second area as black.

In this embodiment, after determining the first color and the second color, the electronic device further determines whether the grayscales corresponding to the first color and the second color are greater than the second preset threshold. When the grayscales corresponding to the first color and the second color are greater than the second preset threshold, the colors of the status bar icons in the first area and the second area are displayed as white; or when the grayscales corresponding to the first color and the second color are less than the second preset threshold, the colors of the status bar icons in the first area and the second area are displayed as black.

With reference to the first aspect, in some implementations of the first aspect, the method further includes: determining the range of the first area and the range of the second area.

In this embodiment, the electronic device may determine the range of the first area and the range of the second area based on the first window and the second window that are formed by performing the screen splitting operation of the user, to display the status bars in different areas. For example, the electronic device may store four variables, namely, the range of the first area, the range of the second area, the color of the status bar icon within the range of the first area, and the color of the status bar icon within the range of the second area, in four corresponding fields, and display the status bars based on the four fields.

With reference to the first aspect, in some implementations of the first aspect, the first application and the second application are a same application, and an interface displayed in the second window is generated based on an operation performed by the user on an interface of the first window.

In this embodiment, content displayed in the first window is related to content displayed in the second window, and the interface displayed in the second window is generated based on the operation performed by the user on the interface of the first window. For example, the second window may be a lower-level window of the first window.

With reference to the first aspect, in some implementations of the first aspect, the operating system of the electronic device is any one of an Android system, a Windows system, and a Linux system.

According to a second aspect, a display method is provided. The method is executed by an electronic device, and includes: determining whether a first color is consistent with a second color, where the first color corresponds to a status bar area in a first window, the second color corresponds to a status bar area in a second window, and the first window and the second window are two windows of a split-screen interface on the electronic device; determining, based on a determining result, whether to determine a range of a first area and a range of a second area, where the first area is an area for displaying a status bar in the first window, the second area is an area for displaying a status bar in the second window, and at least one application in a first application running in the first window and a second application running in the second window uses an immersive status bar; and displaying the status bars based on the first color and the second color.

In this embodiment, the electronic device determines whether the first color corresponding to the status bar area in the first window is consistent with the second color corresponding to the status bar area in the second window, and determines, based on the determining result, whether to determine the range of the first area and the range of the second area, to display the status bars based on the first color and the second color.

With reference to the second aspect, in some implementations of the second aspect, the determining, based on a determining result, whether to determine a range of a first area and a range of a second area includes: when the first color is inconsistent with the second color, determining the range of the first area and the range of the second area. The displaying the status bars based on the first color and the second color includes: displaying a status bar icon in the first area as the first color based on the first color; and displaying a status bar icon in the second area as the second color based on the second color.

In this embodiment, when the first color is inconsistent with the second color, the electronic device determines the range of the first area and the range of the second area, and displays the status bar icon in the first area as the first color and the status bar icon in the second area as the second color based on the determined range of the first area, the determined range of the second area, the first color, and the second color.

With reference to the second aspect, in some implementations of the second aspect, the determining, based on a determining result, whether to determine a range of a first area and a range of a second area includes: when the first color is consistent with the second color, not determining the range of the first area and the range of the second area.

With reference to the second aspect, in some implementations of the second aspect, a color of the status bar icon is preset for the first application and/or a color of the status bar icon is preset for the second application, and the method further includes: obtaining the color of the status bar icon preset for the first application and/or the color of the status bar icon preset for the second application; and determining the color of the status bar icon preset for the first application as the first color, and/or determining the color of the status bar icon preset for the second application as the second color.

In this embodiment, if the color of the status bar icon is preset for the first application or the second application separately, the electronic device may separately determine the first color and the second color. The electronic device may obtain the color of the status bar icon preset for the first application or the second application, and determine the colors as the first color and the second color.

With reference to the second aspect, in some implementations of the second aspect, the color of the status bar icon is not preset for the first application and/or the color of the status bar icon is not preset for the second application, and the method further includes: obtaining a background color of the first application in the first area and/or a background color of the second application in the second area; and determining the first color and/or the second color based on the background color of the first application in the first area and/or the background color of the second application in the second area, where a difference between the background color of the first application in the first area and the first color is greater than a first preset threshold, and a difference between the background color of the second application in the second area and the second color is greater than the first preset threshold.

In this embodiment, if the color of the status bar icon is not preset for the first application or the second application, the electronic device obtains the background color of the first application in the first area and the background color of the second application in the second area, and determines the first color and the second color based on the obtained background colors, to display the status bars. Specifically, the electronic device may obtain an identifier that is set by the application and that is applied to the background color in the first area and/or the background color in the second area, and determine the first color and/or the second color based on the background color identifier.

With reference to the second aspect, in some implementations of the second aspect, the method further includes: determining whether a first grayscale corresponding to the first color and a second grayscale corresponding to the second color are greater than a second preset threshold. The displaying the status bars based on the first color and the second color includes: when the first grayscale or the second grayscale is greater than the second preset threshold, displaying the status bar icon in the first area or the status bar icon in the second area as white; and when the first grayscale or the second grayscale is less than the second preset threshold, displaying the status bar icon in the first area or the status bar icon in the second area as black.

With reference to the second aspect, in some implementations of the second aspect, the first application and the second application are a same application, and an interface displayed in the second window is generated based on an operation performed by a user on an interface of the first window.

With reference to the second aspect, in some implementations of the second aspect, an operating system of the electronic device is any one of an Android system, a Windows system, and a Linux system.

According to a third aspect, an electronic device is provided, including one or more processors and a memory. The memory includes instructions. When the instructions are executed by the one or more processors, the electronic device is enabled to perform the following steps: in response to a screen splitting operation of a user, splitting a screen of the electronic device into at least two windows, where the at least two windows include a first window and a second window, and at least one application in a first application running in the first window and a second application running in the second window uses an immersive status bar; determining a first color based on the first application, and determining a second color based on the second application; and displaying a color of a status bar icon within a range of a first area based on the first color, and displaying a color of a status bar icon within a range of a second area based on the second color, where the first area is an area for displaying a status bar in the first window, and the second area is an area for displaying a status bar in the second window.

With reference to the third aspect, in some implementations of the third aspect, when the instructions are executed by the one or more processors, the electronic device is enabled to perform the following steps: determining the first color based on a background color of the first application in the first area, where a difference between the background color of the first application in the first area and the first color is greater than a first preset threshold; or determining the first color based on a color that is of the status bar icon and that is preset for the first application; and determining the second color based on a background color of the second application in the second area, where a difference between the background color of the second application in the second area and the second color is greater than the first preset threshold; or determining the second color based on a color that is of the status bar icon and that is preset for the second application.

With reference to the third aspect, in some implementations of the third aspect, when the instructions are executed by the one or more processors, the electronic device is enabled to perform the following steps: determining whether a first grayscale corresponding to the first color and a second grayscale corresponding to the second color are greater than a second preset threshold; when the first grayscale or the second grayscale is greater than the second preset threshold, displaying the color of the status bar icon within the first area or the color of the status bar icon within the second area as white; and when the first grayscale or the second grayscale is less than the second preset threshold, displaying the color of the status bar icon within the range of the first area or the color of the status bar icon within the range of the second area as black.

With reference to the third aspect, in some implementations of the third aspect, when the instructions are executed by the one or more processors, the electronic device is enabled to perform the following step: determining the range of the first area and the range of the second area.

With reference to the third aspect, in some implementations of the third aspect, the first application and the second application are a same application, and an interface displayed in the second window is generated based on an operation performed by the user on an interface of the first window.

With reference to the third aspect, in some implementations of the third aspect, an operating system of the electronic device is any one of an Android system, a Windows system, and a Linux system.

According to a fourth aspect, an electronic device is provided, including one or more processors and a memory. The memory includes instructions. When the instructions are executed by the one or more processors, the electronic device is enabled to perform the following steps: determining whether a first color is consistent with a second color, where the first color corresponds to a status bar area in a first window, the second color corresponds to a status bar area in a second window, and the first window and the second window are two windows of a split-screen interface on the electronic device; determining, based on a determining result, whether to determine a range of a first area and a range of a second area, where the first area is an area for displaying a status bar in the first window, the second area is an area for displaying a status bar in the second window, and at least one application in a first application running in the first window and a second application running in the second window uses an immersive status bar; and displaying the status bars based on the first color and the second color.

With reference to the fourth aspect, in some implementations of the fourth aspect, when the instructions are executed by the one or more processors, the electronic device is enabled to perform the following steps: when the first color is inconsistent with the second color, determining the range of the first area and the range of the second area; displaying a status bar icon in the first area as the first color based on the first color; and displaying a status bar icon in the second area as the second color based on the second color.

With reference to the fourth aspect, in some implementations of the fourth aspect, a color of the status bar icon is preset for the first application and/or a color of the status bar icon is preset for the second application, and when the instructions are executed by the one or more processors, the electronic device is enabled to perform the following steps: obtaining the color of the status bar icon preset for the first application and/or the color of the status bar icon preset for the second application; and determining the color of the status bar icon preset for the first application as the first color, and/or determining the color of the status bar icon preset for the second application as the second color.

With reference to the fourth aspect, in some implementations of the fourth aspect, the color of the status bar icon is not preset for the first application and/or the color of the status bar icon is not preset for the second application, and when the instructions are executed by the one or more processors, the electronic device is enabled to perform the following steps: obtaining a background color of the first application in the first area and/or a background color of the second application in the second area; and determining the first color and/or the second color based on the background color of the first application in the first area and/or the background color of the second application in the second area, where a difference between the background color of the first application in the first area and the first color is greater than a first preset threshold, and a difference between the background color of the second application in the second area and the second color is greater than the first preset threshold.

With reference to the fourth aspect, in some implementations of the fourth aspect, when the instructions are executed by the one or more processors, the electronic device is enabled to perform the following steps: determining whether a first grayscale corresponding to the first color and a second grayscale corresponding to the second color are greater than a second preset threshold; when the first grayscale or the second grayscale is greater than the second preset threshold, displaying the status bar icon in the first area or the status bar icon in the second area as white; and when the first grayscale or the second grayscale is greater than the second preset threshold, displaying the status bar icon in the first area or the status bar icon in the second area as black.

With reference to the fourth aspect, in some implementations of the fourth aspect, the first application and the second application are a same application, and an interface displayed in the second window is generated based on an operation performed by a user on an interface of the first window.

With reference to the fourth aspect, in some implementations of the fourth aspect, an operating system of the electronic device is any one of an Android system, a Windows system, and a Linux system.

According to a fifth aspect, an electronic device is provided. The electronic device includes: a processing unit, configured to: in response to a screen splitting operation of a user, split a screen of the electronic device into at least two windows, where the at least two windows include a first window and a second window, and at least one application in a first application running in the first window and a second application running in the second window uses an immersive status bar; a determining unit, further configured to: determine a first color based on the first application, and determine a second color based on the second application; and a display unit, configured to: display a status bar icon within a range of a first area based on the first color, and display a status bar icon within a range of a second area based on the second color, where the first area is an area for displaying a status bar in the first window, and the second area is an area for displaying a status bar in the second window.

In this embodiment, the electronic device includes the processing unit, the determining unit, and the display unit. The processing unit is configured to: in response to the screen splitting operation of the user, split the screen of the electronic device into the at least two windows. The determining unit is configured to determine the first color and the second color based on the applications in the first window and the second window of the electronic device. The display unit is configured to: display a color of the status bar icon within the range of the first area based on the first color, and display a color of the status bar icon within the range of the second area based on the second color.

With reference to the fifth aspect, in some implementations of the fifth aspect, the determining unit is specifically configured to: determine the first color based on a background color of the first application in the first area, where a difference between the background color of the first application in the first area and the first color is greater than a first preset threshold; or determine the first color based on a color that is of the status bar icon and that is preset for the first application; and determine the second color based on a background color of the second application in the second area, where a difference between the background color of the second application in the second area and the second color is greater than the first preset threshold; or determine the second color based on a color that is of the status bar icon and that is preset for the second application.

With reference to the fifth aspect, in some implementations of the fifth aspect, the determining unit is further configured to determine whether a first grayscale corresponding to the first color and a second grayscale corresponding to the second color are greater than a second preset threshold. The display unit is specifically configured to: when the first grayscale or the second grayscale is greater than the second preset threshold, display the status bar icon within the first area or the status bar icon within the second area as white; and when the first grayscale or the second grayscale is less than the second preset threshold, display the status bar icon within the range of the first area or the status bar icon within the range of the second area as black.

With reference to the fifth aspect, in some implementations of the fifth aspect, the determining unit is further configured to determine the range of the first area and the range of the second area.

With reference to the fifth aspect, in some implementations of the fifth aspect, the first application and the second application are a same application, and an interface displayed in the second window is generated based on an operation performed by the user on an interface of the first window.

With reference to the fifth aspect, in some implementations of the fifth aspect, an operating system of the electronic device is any one of an Android system, a Windows system, and a Linux system.

According to a sixth aspect, an electronic device is provided, including a determining unit and a display unit. The determining unit is configured to determine whether a first color is consistent with a second color, where the first color corresponds to a first window, the second color corresponds to a second window, and the first window and the second window are two windows of a split-screen interface on the electronic device; the determining unit is further configured to determine, based on a determining result, whether to determine a range of a first area and a range of a second area, where the first area is an area for displaying a status bar in the first window, the second area is an area for displaying a status bar in the second window, the first application runs in the first window, the second application runs in the second window, and at least one application in the first application and the second application uses an immersive status bar; and the display unit is configured to display the status bars based on the first color and the second color.

With reference to the sixth aspect, in some implementations of the sixth aspect, the determining unit is specifically configured to: when the first color is inconsistent with the second color, determine the range of the first area and the range of the second area. The display unit is specifically configured to: display a status bar icon in the first area as the first color based on the first color, and display a status bar icon in the second area as the second color based on the second color.

With reference to the sixth aspect, in some implementations of the sixth aspect, a color of the status bar icon is preset for the first application and/or a color of the status bar icon is preset for the second application, and the electronic device further includes an obtaining unit, configured to obtain the first color preset for the first application and/or the second color preset for the second application. The determining unit is further configured to: determine the color of the status bar icon preset for the first application as the first color, and/or determine the color of the status bar icon preset for the second application as the second color.

With reference to the sixth aspect, in some implementations of the sixth aspect, the color of the status bar icon is not preset for the first application and/or the color of the status bar icon is not preset for the second application. The obtaining unit is further configured to obtain a background color of the first application in the first area and/or a background color of the second application in the second area. The determining unit is further configured to determine the first color and/or the second color based on the background color of the first application in the first area and/or the background color of the second application in the second area, where a difference between the background color of the first application in the first area and the first color is greater than a first preset threshold, and a difference between the background color of the second application in the second area and the second color is greater than the first preset threshold.

With reference to the sixth aspect, in some implementations of the sixth aspect, the determining unit is further configured to determine whether a first grayscale corresponding to the first color and a second grayscale corresponding to the second color are greater than a second preset threshold. The display unit is specifically configured to: when the first grayscale or the second grayscale is greater than the second preset threshold, display the status bar icon in the first area or the status bar icon in the second area as white; and when the first grayscale or the second grayscale is greater than the second preset threshold, display the status bar icon in the first area or the status bar icon in the second area as black.

With reference to the sixth aspect, in some implementations of the sixth aspect, the first application and the second application are a same application, and an interface displayed in the second window is generated based on an operation performed by a user on an interface of the first window.

With reference to the sixth aspect, in some implementations of the sixth aspect, an operating system of the electronic device is any one of an Android system, a Windows system, and a Linux system.

According to a seventh aspect, a computer storage medium is provided, including computer instructions. When the computer instructions are run on an electronic device, the electronic device is enabled to perform the display method according to any one of the first aspect or the implementations of the first aspect and any one of the second aspect or the implementations of the second aspect.

According to an eighth aspect, a computer program product is provided. When the computer program product runs on a computer, the computer is enabled to perform the display method according to any one of the first aspect or the implementations of the first aspect and any one of the second aspect or the implementations of the second aspect.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a) and FIG. 3(b) are diagrams of an immersive status bar and a non-immersive status bar;
FIG. 4(a) and FIG. 4(b) show a display status of a status bar when an electronic device is in a multi-window mode;
FIG. 5 is a schematic flowchart of a display method according to an embodiment of this application;
FIG. 6(a) to FIG. 6(d) are diagrams of a scenario in which an electronic device to which a display method according to an embodiment of this application is applicable is in a multi-window mode;
FIG. 7 is a diagram of a newly added variable in a display method according to an embodiment of this application;
FIG. 8 is a diagram of a display effect of a status bar to which a display method according to an embodiment of this application is applied;
FIG. 9 is a sequence diagram of a display method according to an embodiment of this application;
FIG. 10 is a schematic flowchart of a display method according to an embodiment of this application;
FIG. 11 is a schematic flowchart of scenario determining of a display method according to an embodiment of this application;
FIG. 12 is a block diagram of an electronic device according to an embodiment of this application; and
FIG. 13 is a block diagram of another electronic device according to an embodiment of this application.

### DESCRIPTION OF EMBODIMENTS

The following describes technical solutions of embodiments in this application with reference to accompanying drawings.

It should be noted that, in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more, and "at least one" or "one or more" means one, two, or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of embodiments, unless otherwise specified, "a plurality of" means two or more.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized. The terms "include", "have", and their variants all mean "include but are not limited to", unless otherwise specifically emphasized.

An embodiment of this application provides a display method, and the method may be applied to an electronic device, or may be applied to an independent application. The application may implement an application window display method in this application. Specifically, according to the display method provided in this application, a window displayed in a split-screen state may be switched to be displayed in a state of a floating window or a floating icon, or the window is locked at an edge of a screen. In this way, when a user needs to use the application again, the user can quickly perform an operation on the floating window, the floating icon, or the locked window without interrupting a current application task. This improves user experience.

The application window display method provided in embodiments of this application may be applied to a mobile phone (for example, a common-screen mobile phone, a curved-screen mobile phone, a foldable-screen mobile phone, or a full-screen mobile phone), a tablet computer, a vehicle-mounted device, a wearable device (for example, a smartwatch, a smart band, smart glasses, or smart jewelry), an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a television, a display, and another electronic device having a display function. A specific type of the electronic device is not limited in embodiments of this application. An example embodiment of an electronic device includes but is not limited to an electronic device using iOS^{®}, Android^{®}, Microsoft^{®}, or another operating system.

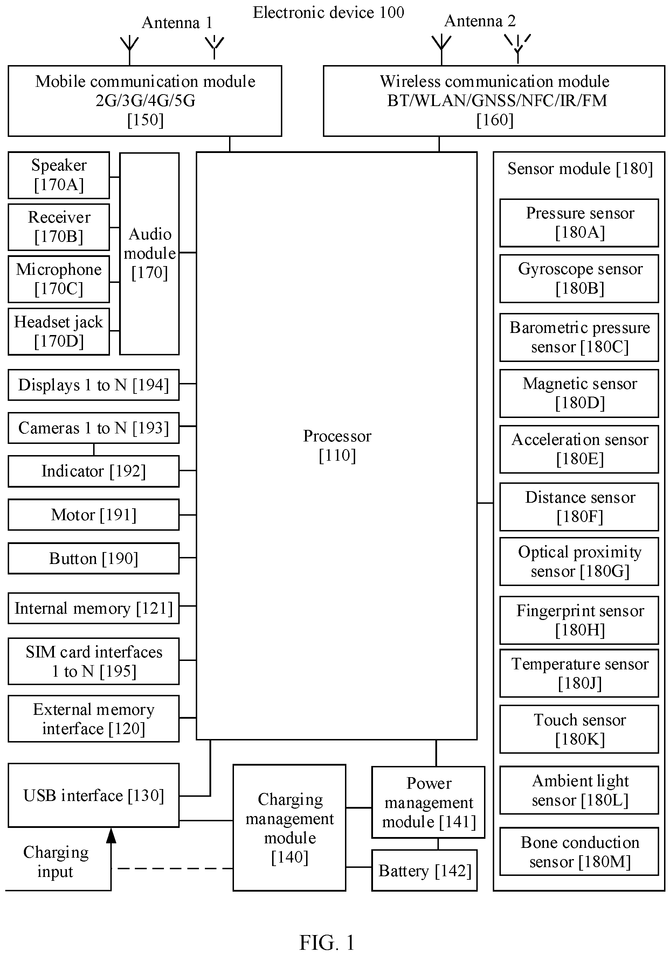

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. The PCM interface may also be used to perform audio communication, and sample, quantize, and code an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100. The GPIO interface may be configured by using software. The GPIO interface may be configured as a control signal or a data signal. The GPIO interface may alternatively be configured as an I2C interface, an I2S interface, a UART interface, an MIPI interface, or the like. The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The power management module 141 is configured to connect to the battery 142. When charging the battery 142, the charging management module 140 may further supply power to the electronic device by using the power management module 141. The power management module 141 may be further configured to monitor parameters such as a battery capacity, a battery cycle count, and a battery health status.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. The mobile communication module 150 may provide a solution to wireless communication that is applied to the electronic device 100 and that includes 2G/3G/4G/5G or the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2. In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Mini-LED, a Micro-LED, a Micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like. The ISP is configured to process data fed back by the camera 193. The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card. The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used.

The electronic device 100 may implement an audio function, for example, music playing and recording, through the audio module 170, the speaker 170A, the receiver 170B, the microphone 170C, the headset jack 170D, the application processor, and the like.

In addition, the electronic device 100 further includes a plurality of sensors, for example, the plurality of sensors shown in FIG. 1. The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing a message is performed. When a touch operation whose touch operation intensity is greater than or equal to the first pressure threshold is performed on the application icon "Messages", an instruction for creating an SMS message is executed.

The gyroscope sensor 180B may be configured to determine a moving posture of the electronic device 100. The barometric pressure sensor 180C is configured to measure barometric pressure. The magnetic sensor 180D includes a Hall sensor, and the electronic device 100 may detect opening and closing of a flip cover or a flip by using the magnetic sensor 180D. The acceleration sensor 180E may detect accelerations in various directions (usually on three axes) of the electronic device 100. When the electronic device 100 is still, the acceleration sensor 180E may detect a magnitude and a direction of gravity. The acceleration sensor 180E may be further configured to identify a posture of the electronic device, and is used in an application such as switching between a landscape mode and a portrait mode or a pedometer. The distance sensor 180F is configured to measure a distance. The electronic device 100 may measure the distance in an infrared manner or a laser manner. The optical proximity sensor 180G may include, for example, a light emitting diode (LED) and an optical detector, for example, a photodiode. The optical proximity sensor 180G may detect whether there is an object near the electronic device. The ambient light sensor 180L is configured to sense ambient light brightness. The electronic device 100 may adaptively adjust brightness of the display 194 based on the sensed ambient light brightness, automatically adjust white balance during photographing, and the like. The fingerprint sensor 180H is configured to collect a fingerprint. The temperature sensor 180J is configured to detect a temperature. The bone conduction sensor 180M may obtain a vibration signal. The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a position different from that of the display 194.

The button 190 on the electronic device includes a power button, a volume button, and the like. The button 190 may be a mechanical button, or may be a touch button. The electronic device 100 may receive a key input, and generate a key signal input related to a user setting and function control of the electronic device 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized. The indicator 192 may be an indicator light, and may be configured to indicate a charging status and a power change, or may be configured to indicate a message, a missed call, a notification, and the like. The SIM card interface 195 is configured to connect to a SIM card.

The foregoing describes a diagram of a possible hardware structure of the electronic device 100. A software system of the electronic device 100 may use a layered architecture, an event-driven architecture, a microkernel architecture, a micro service architecture, or a cloud architecture. In this embodiment of this application, an Android^{®} system with the layered architecture is used as an example to illustrate a software structure of the electronic device 100.

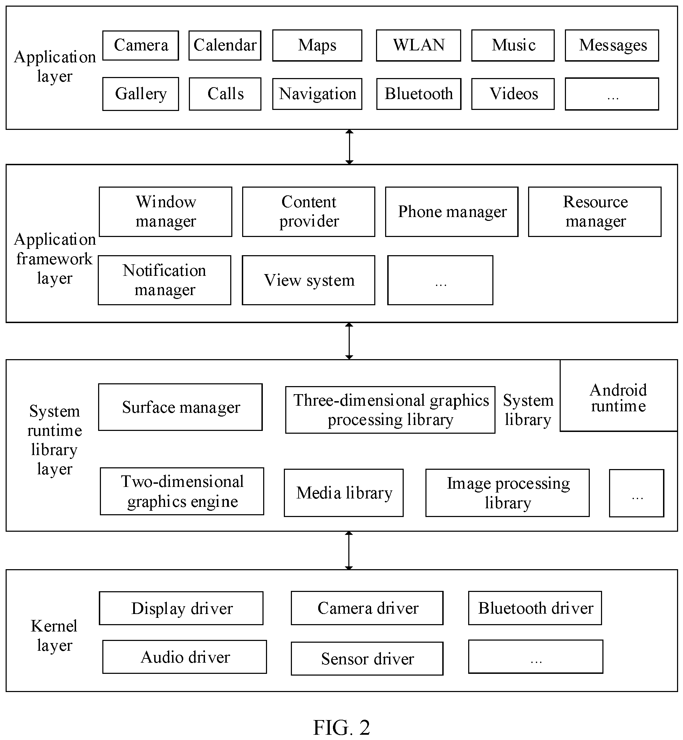

FIG. 2 is a block diagram of the software structure of the electronic device 100 according to an embodiment of this application. In a layered architecture, software of the electronic device is divided into several layers, and each layer has a clear role and task. The layers communicate with each other through a software interface. In some embodiments, an Android system is divided into four layers: an application (application, APP) layer, an application framework (framework) layer, a system runtime library layer (including a system library and an Android runtime (Android runtime)), and a kernel layer from top to bottom.

The application layer may include a series of application packages. As shown in FIG. 2, an application package may include applications such as Camera, Gallery, Calendar, Calls, Maps, Navigation, WLAN, Bluetooth, Music, Videos, and Messages. An application is mainly based on a user interface (user interface, UI), and is usually compiled by invoking an interface of the application framework layer by using a Java language.

The application framework layer provides an application programming interface (application programming interface, API) and a programming framework for an application at the application layer. The application framework layer includes some predefined functions. As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like. For example, the window manager may obtain a size of a to-be-displayed window on the electronic device 100, determine content in the to-be-displayed window, and the like. It should be understood that the to-be-displayed window on the electronic device 100 may include a window that is being displayed on an interface of the electronic device 100, and may further include a window of one or more applications running in a background of the electronic device 100.

The window manager is an independent service (service) that is global, unique in the system, and independent of Android (Android) applications. The window manager is shared by all Android applications. An Android window management system is based on a client/server (client/service, C/S) mode. The entire window system includes two parts: a server (service) and a client (client). The client is an application that is responsible for requesting to create and use a window. The server is a window manager service (window manager service or WindowManagerService, WMS) that is responsible for maintaining and displaying the window. The client does not directly interact with the window manager service, but directly interacts with a local object window manager (window manager or WindowManager). Then, the window manager (WindowManager) interacts with the window manager service (WindowManagerService). The interaction is transparent to the application, and the application is unaware of existence of the window manager service.

A window may be understood as a rectangular area on a screen, and a user interface (user interface, UI) is displayed in the window for interaction with a user. In some embodiments, the window may alternatively hide the user interface (that is, an operation interface of software), and quickly present application navigation and a function operation to the user when the user needs to perform an operation, or expand the operation interface of the application again based on a triggered instruction. From a perspective of the system, the window is actually a canvas (surface). There may be a plurality of windows on a screen. A layout and a sequence of the plurality of windows, and window animation are managed by the window manager service WMS, and of a plurality of pieces of canvas content are mixed and displayed by a SurfaceFlinger service. The window is layered. A window at a higher layer covers a window at a lower layer.

The system runtime library layer (libraries) may be divided into two parts: the system library and the Android runtime.

The Android runtime is an Android runtime environment and includes a core library and a virtual machine. The Android runtime is responsible for scheduling and management of the Android system. The kernel library includes two parts: a function that needs to be called in Java language and a kernel library of Android. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library is a support of an application framework, is an important link connecting the application framework layer and the kernel layer, and may include a plurality of functional modules, for example, a surface manager (surface manager), a media library (media libraries), a three-dimensional graphics processing library (for example, an open graphics library for embedded systems (open graphics library for embedded systems, OpenGL ES)), and a 2D graphics engine (for example, a Skia database (skia graphics library, SGL)).

The kernel layer is a layer between hardware and software, and is used to provide essential functions of an operating system, for example, file management, memory management, process management, and a network protocol stack. The kernel layer includes at least a display driver, a camera driver, an audio driver, a sensor driver and a Bluetooth driver.

For ease of understanding, in the following embodiments of this application, an electronic device having the structures shown in FIG. 1 and FIG. 2 is used as an example to describe in detail, with reference to the accompanying drawings and application scenarios, a display method provided in embodiments of this application.

With continuous development of electronic device technologies, screen sizes of electronic devices such as mobile phones or tablet computers are increasingly large, and an increasing quantity of applications (applications, Apps) are installed on the electronic device. To meet a personalized requirement of a user, an increasing quantity of electronic devices support a multi-window mode (which is also referred to as a multi-screen mode or a split-screen function), to be specific, a plurality of applications can be simultaneously run and displayed on one screen. After the multi-window mode of the electronic device is enabled, the user may split a screen of the electronic device. For example, the screen of the electronic device is split into two windows. In some embodiments, one application runs independently in each window, and applications in the two windows do not affect each other. In some other embodiments, a same application runs in the two windows. In this case, interfaces of the application in the two windows may not affect each other, in other words, the interfaces displayed in the two windows may be a same interface or different interfaces. Alternatively, different interfaces of the application may be displayed in the two windows, and content displayed in one window may be generated by performing an operation in the other window by a user, in other words, content displayed in the two windows has a specific relationship. In some other embodiments, the electronic device may alternatively be in a multi-screen cooperative working mode with another electronic device, in other words, the two windows of the electronic device are displayed on a screen of the another electronic device. In some other embodiments, the electronic device may implement the multi-window mode through the application.

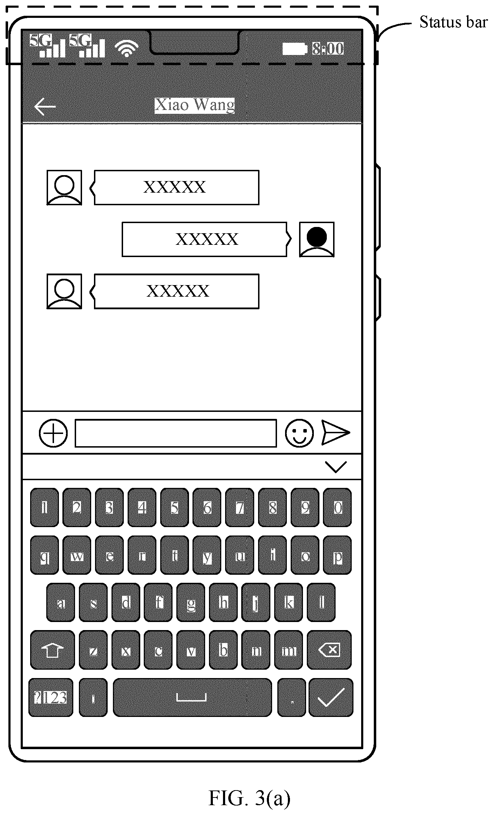

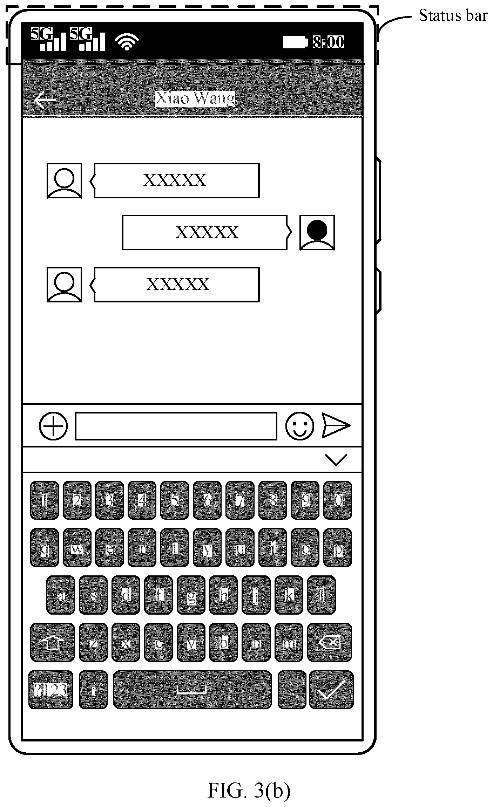

A status bar is generally set on the top of the electronic device, and an icon like a battery level, time, and signal quality are generally displayed in the status bar. To provide better experience for the user, a system provides a status bar in an immersive mode. In other words, an application in each window is extended to the entire screen of the electronic device, so that the user is not disturbed by the status bar of the system when using the application. FIG. 3(a) and FIG. 3(b) show examples of an immersive status bar and a non-immersive status bar respectively. FIG. 3(a) is the example of the immersive status bar. A background color of a status bar area is consistent with that of an application, to provide good user experience. The application can set a color of a status bar icon based on an interface style, so that an application interface is consistent with a system interface. In FIG. 3(b), the color of the status bar area is black, a color of a style of the application is gray, and styles of the application and the status bar differ greatly. When the immersive status bar is set, a background color of a status bar layer is set to be transparent based on an identifier FLAG_TRANSLUCENT_STATUS, the interface of the application in the window extends to the status bar area, and a color of the application on a window interface is displayed in the status bar area, so that a style of the entire window is consistent, and an icon on the status bar is correspondingly set based on the background color of the status bar area. Generally, the color of the status bar icon and the background color of the status bar area have a large chromatic aberration, so that the status bar icon is clearly visible.

It should be understood that, in this embodiment of this application, the background color of the status bar area or the color of the status bar area is a background color of a corresponding status bar area on a window that can be directly seen by the user when the user uses the electronic device, and the background color of the status bar layer is a color of a status bar layer in a layered window in the system of the electronic device. In some cases, the background color of the status bar area is the background color of the status bar layer. For example, when the application in the window does not use the immersive status bar, and the status bar area is not covered by another floating window, because the status bar layer is displayed at an upper layer of the application interface, the background color of the status bar area is the color of the status bar layer. In some other cases, the background color of the status bar area is not the background color of the status bar layer. For example, the application in the window uses the immersive status bar. In this case, the background color of the status bar layer at the upper layer is transparent. Therefore, the application interface extends to the status bar area for display, and the background color of the status bar area is actually a background color of an application at a lower layer of the status bar.

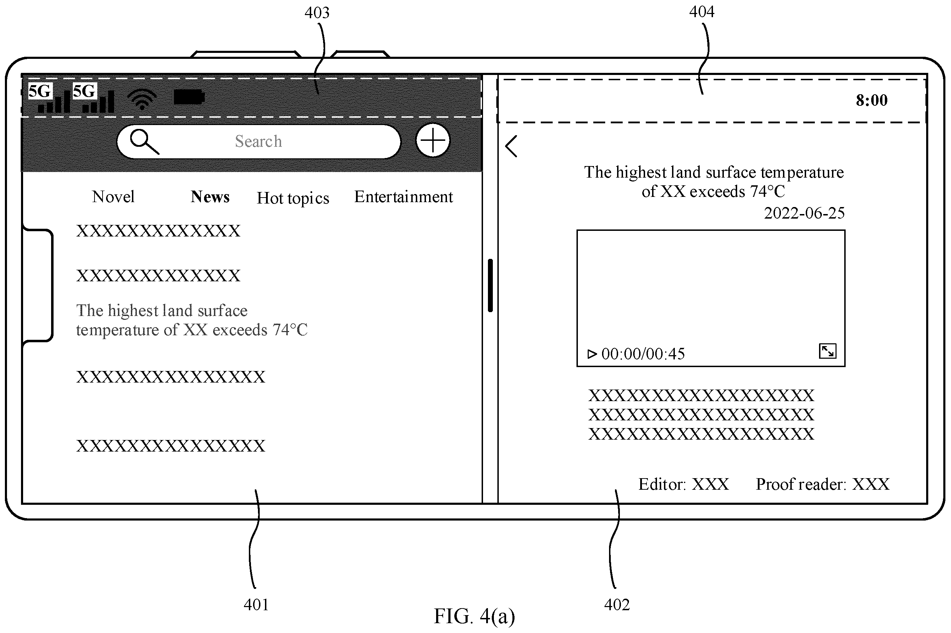

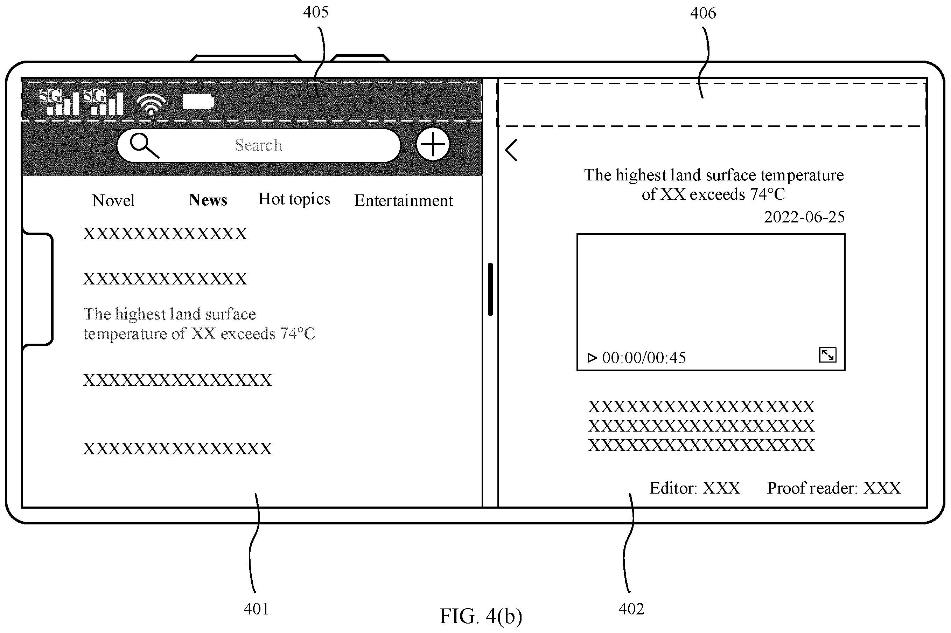

When the electronic device is in the multi-window mode, content displayed in a plurality of windows is generally different. Two windows are used as an example. If there is a window using an immersive status bar in the two windows, a color of a status bar icon in the window using the immersive status bar is set according to an application in a focus window, and the focus window is a window currently tapped or operated by the user. When background colors of corresponding status bar areas in the two windows are different, the status bar icon in the window using the immersive status bar may be unclear. For example, FIG. 4(a) and FIG. 4(b) show a display status of a status bar when the electronic device is in a dual-window mode. As shown in FIG. 4(a) and FIG. 4(b), a screen interface of the electronic device includes a first window 401 and a second window 402. A background color of a status bar area in the window 401 is a dark color, and a background color of a status bar area in the window 402 is a light color.

When the focus window is the window 402, as shown in FIG. 4(a), an icon on a status bar is set based on the window 402. A background color of a status bar area 404 in the window 402 is a light color, and a color of the icon is set to black. Therefore, a color of an icon included in a status bar area 403 in the window 401 is set to black according to a color of the icon in the status bar area 404 in the window 402, to be specific, signal strength icons of two SIM cards of the electronic device, a wireless network icon, and a battery level icon that are displayed in the status bar area 403 in the window 401, and a time icon displayed in the status bar area 404 in the window 402 are all set to black by an operating system of the electronic device. In this case, the status bar icon in the window 401 and a background of the status bar area 401 corresponding to the window 401 can have a specific chromatic aberration, and the icon can be recognized.

However, when the focus window is the window 401, as shown in FIG. 4(b), an icon in a status bar area 405 in the window 402 is set to white according to a color of an icon in a status bar area 406 in the window 401, to be specific, signal strength icons of two SIM cards of the electronic device, a wireless network icon, and a battery level icon that are displayed in the status bar area 405 in the window 401, and a time icon displayed in the status bar area 406 in the window 402 are all set to white by the operating system of the electronic device. In this case, the time icon in the status bar area 406 in the window 402 cannot be clearly displayed because a color of the time icon is consistent with a background color of the status bar area 406.

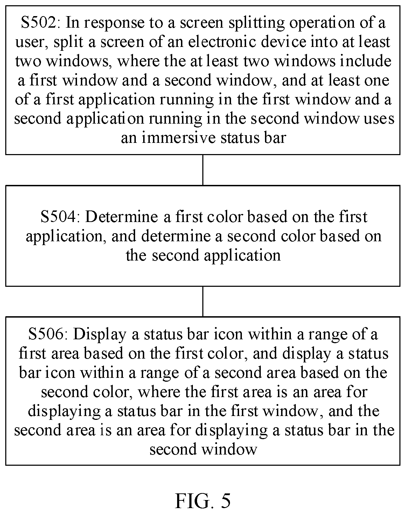

FIG. 5 shows a display method according to an embodiment of this application.

S502: In response to a screen splitting operation of a user, split a screen of an electronic device into at least two windows, where the at least two windows include a first window and a second window, and at least one application in a first application running in the first window and a second application running in the second window uses an immersive status bar.

In S502, the electronic device splits the screen of the electronic device into the at least two windows in response to the screen splitting operation of the user. For example, the screen of the electronic device is split into two windows, and the electronic device is in a dual-window mode.

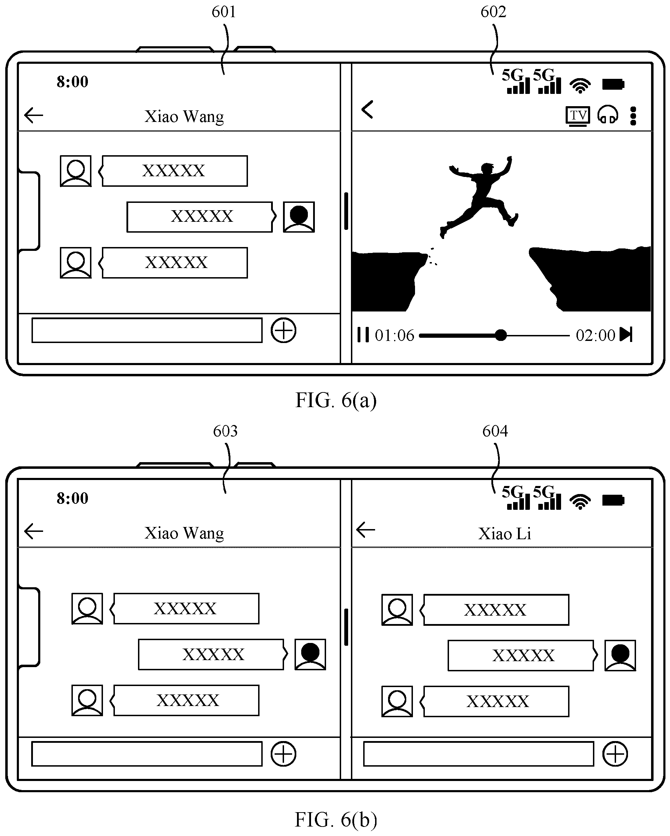

In some embodiments, interfaces in the two windows may be displayed independently. The first application and the second application may not be a same application. For example, if the user needs to play a video while performing a session chat, and video playing is not blocked during the chat, the user may perform the screen splitting operation. In response to the screen splitting operation of the user, the electronic device enters a screen splitting interface. In this case, the screen of the electronic device is split into two windows, two applications run independently in the two windows, and the user may separately perform independent operations on application interfaces displayed in the two windows. As shown in FIG. 6(a), the screen of the electronic device is split into a first window 601 and a second window 602 in response to the operation of the user. The first window 601 may be used for a session between the user and Xiao Wang. The user may play a video by using the second window 602. Operations performed by the user on the first window 601 and the second window 602 are independent of each other and do not affect each other. For another example, the first application and the second application may not be two independent applications, but independent interfaces of a same application. For example, the user wants to use a same application to establish sessions with two persons at the same time, and does not want to frequently exit and enter a session interface to switch between two session interfaces. As shown in FIG. 6(b), if the user wants to use one application to establish sessions with Xiao Wang and Xiao Li at the same time, the screen of the electronic device may be split into a first window 603 and a second window 604. The user may use the first window 603 to perform a session with Xiao Wang, and use the second window 604 to perform a session with Xiao Li. The first window 603 and the second window 604 display different interfaces of a same application, and interfaces of the two windows are independent of each other.

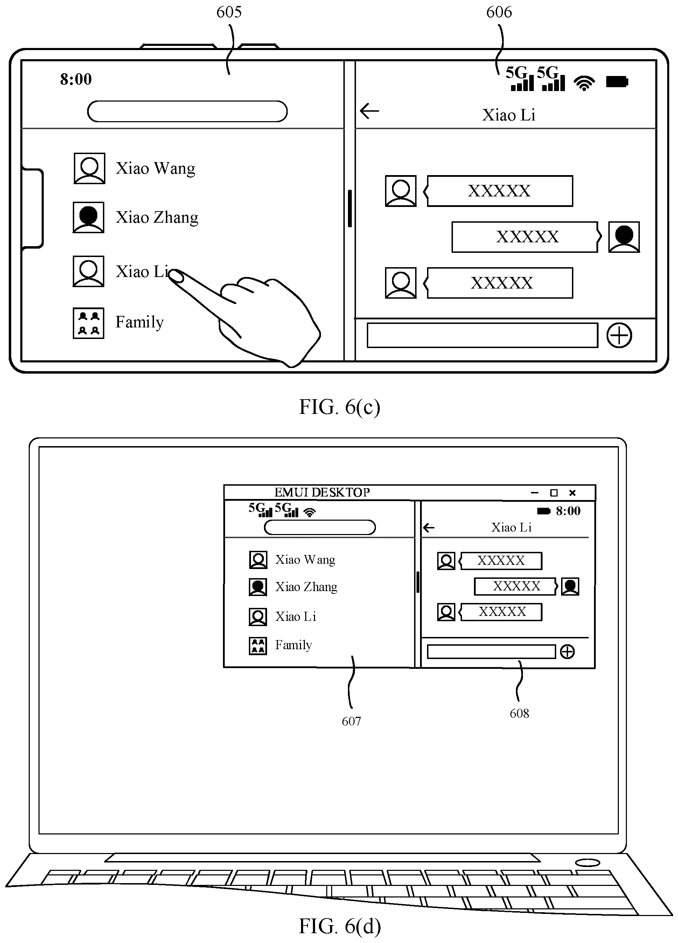

In some other embodiments, the first application and the second application are a same application, and an interface displayed in the second window is generated based on an operation performed by the user on an interface of the first window. In other words, the interfaces displayed in the two windows are different interfaces of a same application, and the second window is displayed based on the operation performed by the user on the first window. For example, in FIG. 6(c), the user starts a session application, and a first window 605 displays a session list of the user. The session list of the user may include Xiao Wang, Xiao Zhang, Xiao Li, and Family. If the user selects a session "Xiao Li", a second window 606 displays specific content of the session between the user and "Xiao Li". The user may further select another session in the first window 605, and the another session of the user correspondingly appears in the second window 606. In other words, content displayed in the second window 606 is a lower-level window displayed based on an operation performed by the user on the first window 605. It should be understood that, in this application, only the session application is used to illustrate an example in which the second window is displayed based on the operation performed by the user on the first window in a multi-window state. This is also applicable to another scenario. For example, in a shopping app, the first window is a commodity list, and the second window is commodity details displayed after the user taps a commodity in the list.

In the foregoing scenario, both the windows of the electronic device are on a display of the electronic device. In some other scenarios, the electronic device may be in a multi-screen collaboration mode, in other words, the windows of the electronic device are displayed on another electronic device. For example, as shown in FIG. 6(d), a screen interface of a mobile phone is displayed on an interface of a notebook computer, and the screen interface of the mobile phone includes a first window 607 and a second window 608. The user may operate, on a display of the computer, the interface displayed on the mobile phone.

The display method provided in this embodiment of this application may alternatively be applied to an application on the electronic device. For example, an Android simulator is used on the notebook computer to display a split-screen interface, and the split-screen interface displayed on the Android simulator includes a first window and a second window.

After the screen of the electronic device is split into at least two windows, the electronic device determines whether the application in the two windows uses an immersive status bar.

In some embodiments, the application uses an immersive mode by default. After the application is started, the electronic device can learn that the application sets a background color of a status bar layer of an interface of the application to be transparent. Specifically, the application has a STATUS_BAR_TRANSPARENT identifier, the operating system of the electronic device determines that there are two windows after the user performs the screen splitting operation, and a background color of a status bar layer on an interface of one application or interfaces of two applications in the two windows is set to be transparent by the application based on the identifier.

In some other embodiments, if no immersive status bar is preset for the first application and the second application on the two windows obtained by splitting the screen by the user, the electronic device may set the immersive status bar for the two interfaces of the application, so that user experience on the interface of the application on the electronic device is better. Specifically, the operating system of the electronic device may add the STATUS_BAR_TRANSPARENT identifier, and set the background color of the status bar layer to be transparent, so that a color of a status bar area changes with an application background, to complete a setting of the immersive status bar.

In some other embodiments, if the immersive status bar is preset for the first application in the first window in the two windows obtained by splitting the screen by the user, and no immersive status bar is set for the second application in the second window, the electronic device may set the immersive status bar for the second application to make a display interface of the second application more comfortable, or may not set the immersive status bar for the second application based on a setting of the second application.

After S502, the immersive status bar is preset for an application corresponding to at least one window in the two windows of the electronic device, or the system of the electronic device sets the immersive status bar for an application corresponding to the window.

In this embodiment of this application, the electronic device further determines a range of a first area and a range of a second area.

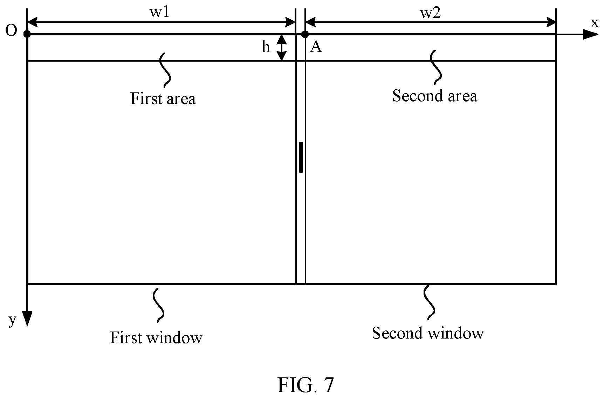

Specifically, for example, the range of the first area and the range of the second area may be respectively stored in corresponding variables. For example, the range of the first area and the range of the second area may be stored in variables stackbounds_1 (x1, y1, height1, width1) and stackbounds_2 (x2, y2, height2, width2) respectively, where (x, y) are coordinates of an area vertex, and (height, width) are a height and a width of an area. As shown in FIG. 7, there is the first window and the second window on the electronic device. The first area corresponding to the status bar in the first window and the second area corresponding to the second window in the status bar are already shown in FIG. 7. For the first area, a point O at an upper left corner of the first area may be used as a reference, where stackbounds_1=(0, 0, h, w1). For the second area, a point A at an upper left corner of the second area may be used as a reference, where stackbounds_2=(0, 0, h, w2).

S504: Determine a first color based on the first application, and determine a second color based on the second application.

S506: Display a status bar icon within the range of the first area based on the first color, and display a status bar icon within the range of the second area based on the second color, where the first area is an area for displaying a status bar in the first window, and the second area is an area for displaying a status bar in the second window.

The electronic device may determine the first color as a color of the status bar icon in the first area, and determine the second color as a color of the status bar icon in the second area. Therefore, the status bar icon in the first area and the status bar icon in the second area are displayed based on the first color and the second color.

In this embodiment of this application, the determining a first color based on the first application includes: determining the first color based on a background color of the first application in the first area, where a difference between the background color of the first application in the first area and the first color is greater than a first preset threshold; or determining the first color based on a color that is of the status bar icon and that is preset for the first application; and the determining a second color based on the second application includes: determining the second color based on a background color of the second application in the second area, where a difference between the background color of the second application in the second area and the second color is greater than the first preset threshold; or determining the second color based on a color that is of the status bar icon and that is preset for the second application.

In other words, the electronic device may preset, based on the application, or automatically set the colors of the status bar icons corresponding to the first window and the second window. For applications corresponding to the two windows of the electronic device, the immersive status bar is preset, or the immersive status bar is set by the electronic device. The electronic device may determine the first color and the second color in the following several manners.

Manner 1: The colors of the status bar icons have been preset for the first application and the second application. In this case, the electronic device determines the first color based on the color of the status bar icon preset for the first application, and determines the second color based on the color of the status bar icon preset for the second application. For example, in an Android system, the electronic device may learn, based on an identifier SYSTEM_UI_FLAG_LIGHT_STATUS_BAR, that the application uses a light-colored status bar. This means that a color of a status bar icon preset for an application is black. If there is no such identifier, it indicates that the application uses a dark-colored status bar, and a preset color of the icon is white. A dark color and a light color may be grayscale values corresponding to a background color of the status bar area. When the grayscale value is greater than a preset threshold, the background color is a light color. When the grayscale value is less than the preset threshold, the background color is a dark color. For a specific grayscale calculation manner, refer to the following description. Alternatively, the electronic device may obtain, based on different identifiers, different colors of the status bar that are preset for the application. For example, for different colors of the status bar icon, corresponding color identifiers are preset for the application. The color identifiers not only correspond to a black icon and a white icon, but also may correspond to an icon of another color. The electronic device may separately determine the first color and the second color based on the color identifiers of the status bar icon that are set for the application.

Manner 2: The color of the status bar icon is not preset for the first application and the second application. In this case, the electronic device determines the first color based on the background color of the first application in the first area, where a difference between the background color of the first application in the first area and the first color is greater than the first preset threshold; and determines the second color based on the background color of the second application in the second area, where a difference between the background color of the second application in the second area and the second color is greater than the second preset threshold.

The electronic device may obtain the background color of the first application in the first area and the background color of the second application in the second area in two manners.

For example, the electronic device may obtain the background color of the first application in the first area and the background color of the second application in the second area based on background color identifiers of the first application and the second application. For example, for the Android system, the electronic device may obtain a background color corresponding to a top-layer view in decorView corresponding to the first window, and the background color may be stored in a background field in a resource file of an application activity. If no background color is set or a transparent background color is set for the top-layer view, a background color of a lower-layer view continues to be obtained, and finally the background color of the first application in the first area and the background color of the second application in the second area may be obtained. For another operating system, there may be other different background color identifiers and obtaining manners. Details are not described in this embodiment of this application.

For another example, the electronic device may obtain the background color of the first application in the first area and the background color of the second application in the second area by directly collecting colors of a plurality of pixels in the first area and the second area. The plurality of collected pixels in the first area and the second area may be evenly distributed in the first area and the second area. Alternatively, the plurality of collected pixels in the first area and the second area may not be evenly distributed in the first area and the second area. For example, more pixels are collected only near positions at which the status bar icons in the first area and the second area are displayed, to obtain the background colors of the first area and the second area. A color of a single pixel may be calculated based on R, G, and B values of the pixel, where R, G, and B are values of red, green, and blue of the pixel. For example, a value of the pixel may be calculated in a manner like a weighted average of the R, G, and B values, and the color of the single pixel satisfies the following: Y=h1*R+h2*G+h3*B, where h1, h2, and h3 are weights. For example, h1, h2, and h3 may be a same value, and the color of the pixel is an arithmetic average of RGB; or h1, h2, and h3 may be different values, and the values may be set based on a requirement or experience. The background colors of the first area and the second area may be obtained by performing weighted or arithmetic average calculation on the colors of the plurality of pixels in the first area or the second area. Alternatively, the colors of the plurality of pixels in the first area and the second area may be directly obtained by calculating a weighted average or an arithmetic average of R, G, and B values of the plurality of pixels.

After obtaining the background colors of the first area and the second area, the electronic device may determine the first color and the second color based on the background color of the first area and the background color of the second area. An example of determining the first color corresponding to the first application is used. Specifically, for example, the electronic device may determine R, G, and B values of primary colors corresponding to the background color, and may determine the first color based on the R, G, and B values of the background color. A difference between each of an R value, a G value, and a B value corresponding to the first color and each of an R value, a G value, and a B value corresponding to the background color is greater than the first preset threshold, or a difference between one of the R value, the G value, and the B value corresponding to the first color and one of the R value, the G value, and the B value corresponding to the background color is greater than the first preset threshold, where R, G, and B are values of red, green, and blue of the background color.

In some embodiments, for example, the first color and the background color may be complementary colors. When the background color is red, the first color may be set to green, and the first color may be set to the color of the status bar icon.

Alternatively, the electronic device may directly determine the first color by performing negation on the background color. For example, the first color may be obtained by subtracting 255 from the R value, the G value, and the B value that correspond to the background color. Alternatively, the electronic device may determine, based on the R, G, and B values of the background color, YUV values corresponding to the background color, for example, Y=0.299R+0.587G+0.114B. The electronic device may make a Y value corresponding to the first color and a Y value corresponding to the background color greater than the first preset threshold. Alternatively, the electronic device may calculate weighted values corresponding to the R value, the G value, and the B value corresponding to the background color, and set weighted values of the R value, the G value, and the B value of the first color and weighted values of the R value, the G value, and the B value of the background color to be greater than the first preset threshold.

Manner 3: The color of the status bar icon is preset for one of the first application and the second application. For example, the color of the status bar icon is preset for the first application. The electronic device may determine the color of the icon preset for the first application as the first color, and determine the second color based on the background color of the second application in the second area (for a specific determining manner, refer to the foregoing descriptions).

In a scenario in which an application in only one window in the two windows uses the immersive status bar, for example, an application in the first window uses the immersive status bar, and an application in the second window does not use the immersive status bar, for the first window, the first color may be determined in the foregoing manner of determining the background color of the immersive status bar and the color of the icon.

For the second window, if the color of the status bar icon is preset for the application in the second window, the preset color of the icon may be directly determined as the second color. For example, if the operating system of the electronic device learns, by invoking a getWindow().getDecorView().setSystemUiVisibility() method, that the application has the View.SYSTEM_UI_FLAG_LIGHT_STATUS_BAR identifier, the operating system of the electronic device may determine that the background color of the status bar preset for the second application is a light color, and then determine that the color of the status bar icon preset for the second application is a dark color, in other words, the first color is a light color, and the second color is a dark color. For example, in a specific scenario, the light color is white, and the dark color is black.

If the color of the status bar icon is not preset for the application in the second window, in an embodiment, the electronic device may obtain a corresponding color identifier by using a getWindow().setStatusBarColor() method, and determine a color corresponding to the color identifier as the first color. The electronic device may determine the second color in a manner similar to the foregoing manner for the immersive status bar. Alternatively, the operating system of the electronic device may select a corresponding color combination, for example, the background color of the status bar is black, and the color of the status bar icon is white.

After obtaining the first color and the second color, the electronic device may directly determine the first color and the second color as the colors of the status bar icons in the first area and the second area, to be specific, display the status bar icon within the range of the first area and the status bar icon within the range of the second area based on the first color and the second color.

In this embodiment of this application, the electronic device may further determine whether a first grayscale corresponding to the first color and a second grayscale corresponding to the second color are greater than a second preset threshold. Displaying a color of the status bar icon within the range of the first area based on the first color, and displaying a color of the status bar icon within the range of the second area based on the second color includes: when the first grayscale or the second grayscale is greater than the second preset threshold, displaying the color of the status bar icon in the first area or the status bar icon in the second area as white; and when the first grayscale or the second grayscale is greater than the second preset threshold, displaying the color of the status bar icon in the first area or the status bar icon in the second area as black.

For example, after obtaining the first color and the second color, the electronic device may convert the R, G, and B values corresponding to the first color and the second color into YUV values, where Y represents a grayscale, U and V represent chroma, and Y=0.299R+0.587G+0.114B. When Y is greater than 192, the status bar icon in the first area or the second area is displayed as white; and when Y is less than 192, the status bar icon in the first area or the second area is displayed as black. The foregoing formula for calculating Y and the display threshold 192 of the black and white icons are merely provided as an example. In different standards, different calculation formulas may be used to calculate corresponding grayscale values.

In this embodiment of this application, the electronic device displays the status bar of the electronic device based on the range of the first area, the range of the second area, the color of the status bar icon within the range of the first area, and the color of the status bar icon within the range of the second area.

Specifically, the color of the status bar icon within the range of the first area determined by the electronic device may be the first color, or black or white that is further determined based on the first color, and the color of the status bar icon within the range of the second area may be the second color, or black or white that is further determined based on the second color. Then, the color of the status bar icon within the range of the first area may be stored in a variable visibility_1, the color of the status bar icon within the range of the second area may be stored in a variable visibility_2, then the status bar is divided into two parts based on the range stackbounds_1 of the first area and the range stackbounds_2 of the second area, the color of the status bar icon within the range of the first area stored in stackbounds_1 is set to a color in the variable visibility_1, and the color of the status bar icon within the range of the second area stored in stackbounds_2 is set to a color in the variable visibility_2. In this way, the status bar icon is displayed based on values of the four variables. Corresponding colors are set for the status bar icons in different areas, so that the colors of the status bar icons can be set for a plurality of windows on the split-screen interface of the electronic device based on a display status of a current window. In this way, the status bar icons in the entire status bar area can be clearly visible, and user experience is improved.

In this embodiment of this application, the electronic device may use the Android system, a Linux system, a Windows system, or the like.

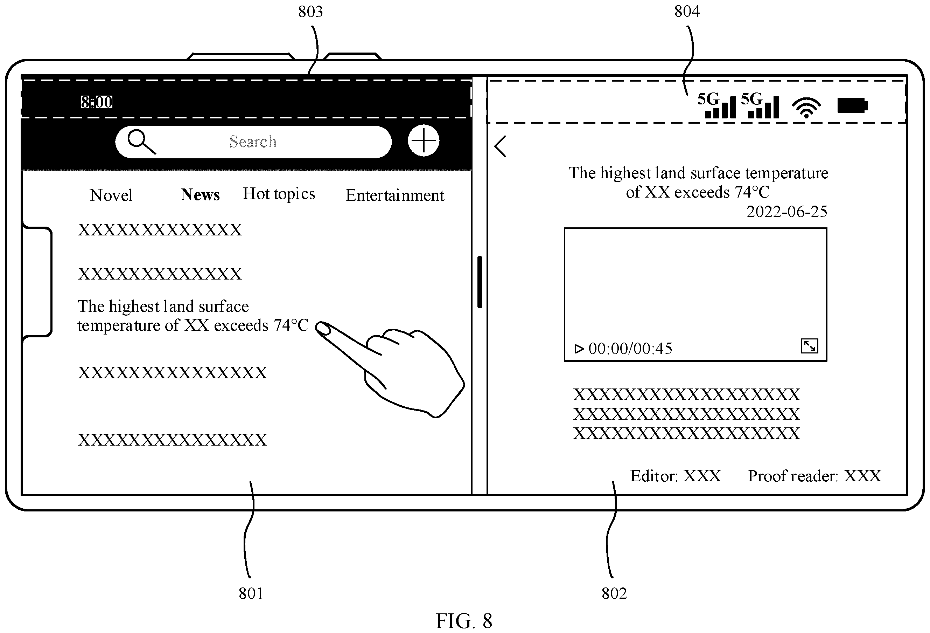

FIG. 8 shows a display status of a status bar when the technical solution in this embodiment of this application is used. In FIG. 8, the screen of the electronic device is split into a first window 801 and a second window 802. A background color corresponding to a first area 803 (indicated by a white dashed-line box) is black, and a background color corresponding to a second area 804 is white. In this way, a color of an icon may be complementary to a color of an area by using an average value, in other words, a status bar icon in the first area is set to white, and a status bar icon in the second area is set to black, so that a status bar icon in each window can be clearly visible.

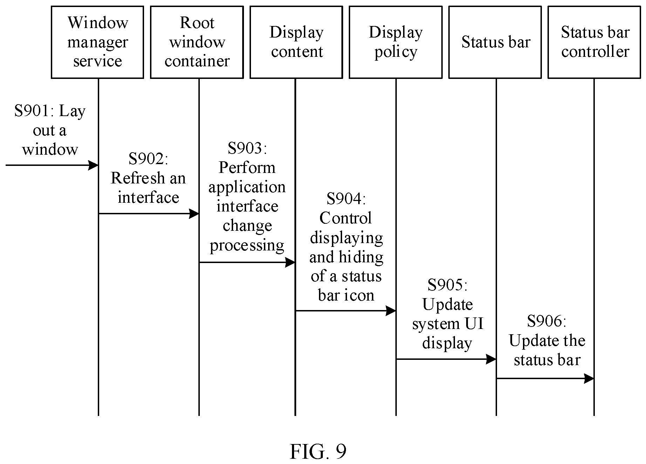

FIG. 9 is a sequence diagram of a display method according to an embodiment of this application. The method includes the following steps.

S901: Layout a window.

In S901, when a window attribute of an electronic device changes, for example, visibility or a window size changes, the window needs to be re-laid out. In this embodiment of this application, the size of the window of the electronic device changes because a user performs a screen splitting operation. Therefore, an operating system of the electronic device receives the screen splitting operation of the user, and invokes a window layout method (relayoutWindow) in a window manager service (WindowManagerService, WMS) to start window layout.

S902: Refresh an interface.

In S902, the window manager service invokes an interface refreshing method (performSurfacePlacement) in a root window container (RootWindowContainer) to refresh the interface of the electronic device, cyclically refreshes a size and a position of a sub-window, and calculates the size of the sub-window. Corresponding to this embodiment of this application, in this step, the electronic device refreshes sizes and positions of a first window and a second window, and calculates the sizes of the first window and the second window.

S903: Perform application interface change processing.

In S903, RootWindowContainer invokes an application interface change processing method (applySurfaceChangesTransaction) in display content (DisplayContent) to complete a window animation, where the window animation may mainly include a window switching or entering animation generated through a screen splitting operation.

S904: Control displaying and hiding of a status bar icon.

In S904, DisplayContent invokes a post layout display method (finishPostLayoutPolicyLw) in a display policy (DisplayPolicy) to control displaying and hiding of the status bar icon, and a specific displayed icon.

S905: Update system UI display.

In S905, DisplayPolicy invokes a system UI update (POLICY_UPDATE_SYSUIVISIBILITY) interface in a system UI display update method (onSystemUiVisivilityChanged) in a status bar (StatusBar) to transfer values of visibility_1, visibility_2, stackbounds_1, and stackbounds_2 to StatusBar, splits the status bar into areas stackbounds_1 and stackbounds _2, and sets colors of corresponding areas based on visibility_1 and visibility_2, so that the status bar can be updated.

S906: Update the status bar.

In S906, StatusBar invokes a status bar update method (updateStatus) in a status bar controller (LightBarController), to update the status bar.

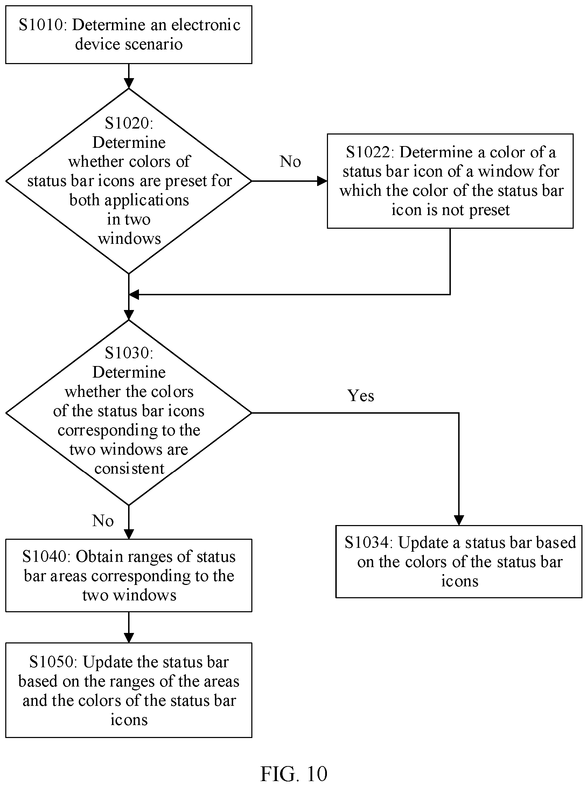

Two windows are used as an example. FIG. 10 is a schematic flowchart of a display method according to an embodiment of this application.

S1010: Match an electronic device scenario.

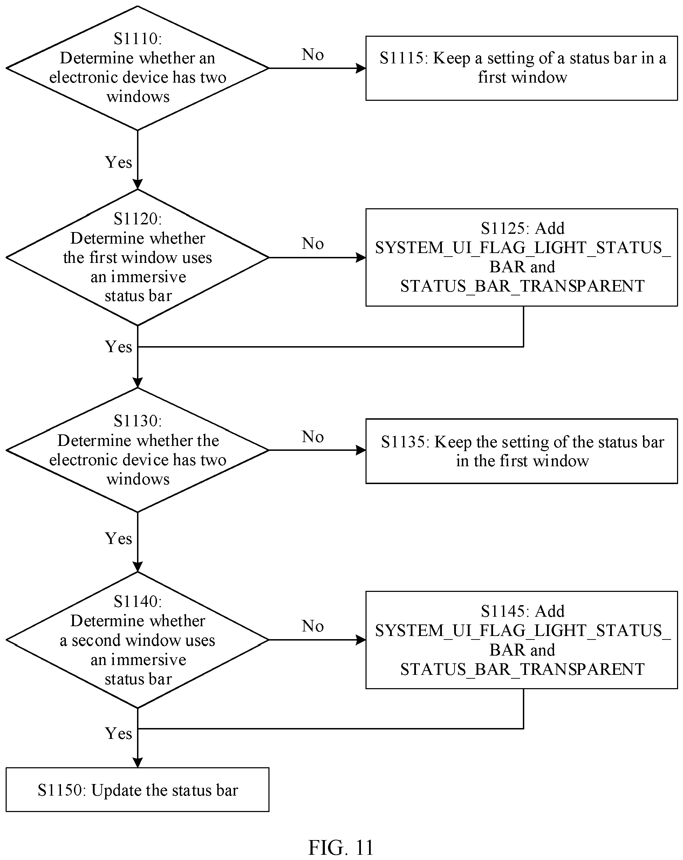

In S1010, an electronic device determines a quantity of windows and whether to use an immersive status bar. As shown in FIG. 11, a scenario matching process is shown in FIG. 11, and includes the following steps.

S1110: Determine whether the electronic device has two windows.

If the electronic device has only one window, only a setting of a status bar in a first window needs to be kept based on step S1115, and there is no need to set a color of the status bar by using the technical solution of this application.

S1120: Determine whether the first window uses the immersive status bar.

In S1120, if the electronic device determines that an application device in the first window already uses the immersive status bar, the electronic device may continue to match a second window scenario. If the application in the first window does not use the immersive status bar, the immersive status bar may be set for the first window based on presetting of the user on the electronic device.

S1130: Determine whether the electronic device has two windows.

Before step S1130 is performed, the electronic device already preliminarily determines a dual-window scenario of the electronic device, and determines that the first window uses the immersive status bar or the immersive status bar is set for the first window. In this case, the electronic device still needs to determine whether there are two windows, to prevent one of the two windows from being closed by a user before subsequent scenario matching is performed.

S1140: Determine whether a second window uses an immersive status bar.

In S1140, the electronic device determines whether the second window uses the immersive status bar, and if the second window does not use the immersive status bar, the electronic device may set the immersive status bar for an application in the second window based on the presetting of the user or a setting of the electronic device.

S1150: Update the status bar based on steps S1020 to S1050.

In electronic device scenario matching completes, the status bar may be updated based on subsequent steps. In the scenario matching process shown in FIG. 11, the electronic device determines that there are two windows, and enables, based on presetting of the two windows or the setting of the electronic device, both the two windows to use the immersive status bar. As described above, the technical solution used in this embodiment of this application may be applied to a scenario in which only one window uses the immersive status bar. Detailed content has been described above, and is not described herein again.

S1020: Determine whether colors of status bar icons are preset for both applications in the two windows.

In S1020, colors of status bar icons are preset some applications for aesthetic purposes of an interface, but the colors of the status bar icons are not preset for some applications. In this step, the electronic device needs to determine whether the colors of the status bar icons are preset for both the applications in the two windows.

S 1022: When it is determined that the color of the status bar icon is not preset for each of the applications in the two windows, determine a color of a status bar icon of a window for which the color of the status bar icon is not preset.

In S 1022, the color of the status bar icon may not be preset for one application or two applications in the applications in the two windows, and the electronic device may determine the color of the status bar icon of the one application or the two applications based on a background color of the one application or the two applications.

S 1030: Determine whether the colors of the status bar icons corresponding to the two windows are consistent.

In S 1030, the colors of the status bar icons corresponding to the two windows may be preset for both the applications; or a color of a status bar icon corresponding to one window is preset, and a color of a status bar icon corresponding to the other window is determined by the electronic device based on a background of the application; or the colors of the status bar icons corresponding to the two windows are determined by the electronic device based on backgrounds of the applications. The electronic device determines whether the colors of the status bar icons corresponding to the two windows are consistent.

S1034: When it is determined that the colors of the status bar icons corresponding to the two windows are consistent, update the status bar based on the colors of the status bar icons.

Because the colors of the status bar icons are the same, the determining process is added before the status bar is updated, the status bar does not need to be divided into two areas to separately set the colors of the status bar icons, and a same color is directly set for icons in the entire status bar.

S 1040: When it is determined that the colors of the status bar icons corresponding to the two windows are inconsistent, obtain ranges of status bar areas corresponding to the two windows.

For the determining in S 1030, when the electronic device determines that the colors of the status bar icons preset for the two windows are inconsistent, the electronic device may obtain the ranges of the status bar areas corresponding to the two windows. Specifically, the status bar may be divided into two areas based on display statuses of the two windows.

S1050: Update the status bar based on the ranges of the areas and the colors of the status bar icons.

In S 1050, because the colors of the status bar icons corresponding to the two windows are inconsistent, the electronic device needs to obtain the ranges of the status bar areas corresponding to the two windows, and separately set the colors of the status bar icons for the two windows based on the ranges of the areas. Specifically, a variable visibility_1 that describes a color of a status bar icon within a range of a first area, a variable visibility_2 that describes a color of a status bar icon within a range of a second area, the range of the first area a variable stackbounds_1, and the range of the second area a variable stackbounds_2 may be added, and the status bar is displayed based on values of the four variables.

In the technical solution shown in FIG. 10, when the first color is consistent with the second color, the status bar does not display corresponding status bar icons in different areas based on corresponding windows, so that processing overheads caused by display of the status bar in different areas in this case can be reduced. In a specific scenario, the manner of the embodiment in FIG. 5 may also be used, in other words, the status bar icons are directly displayed in different areas without considering whether the colors of the icons are consistent.

It should be understood that, in this embodiment of this application, the technical solution in this embodiment of this application is described only by using an example in which a display screen of the electronic device includes two windows. However, when the electronic device includes more windows, for example, three windows or four windows, according to the solution in this embodiment of this application, colors of status bar icons can also be set for status bar areas corresponding to different windows based on an interface of an application and a relationship between a window and a status bar. For example, a variable for storing a range of a status bar area corresponding to a window and a variable for storing a color of a status bar icon may be set for each window in a plurality of windows. Finally, the icons on the status bar may be displayed in different areas based on presetting of an application in each window or determining by the electronic device, so that the status bar icons on the entire screen can be clearly displayed.

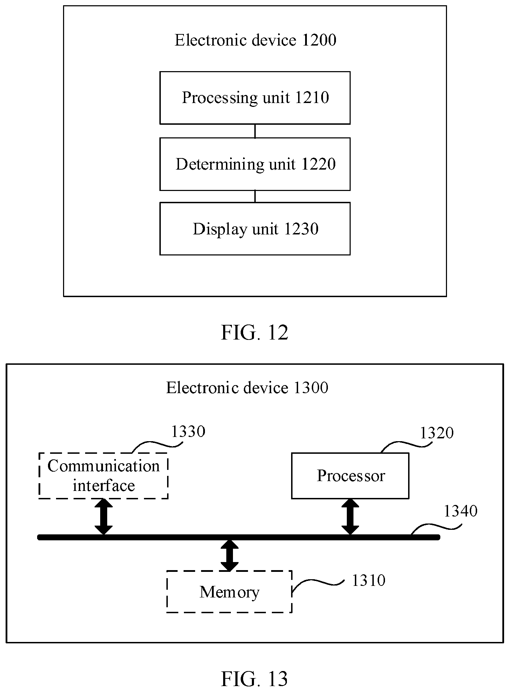

FIG. 12 shows an electronic device 1200 according to an embodiment of this application. The electronic device 1200 includes a determining unit 1210, and the electronic device may further include a display unit 1220. The determining unit 1210 and the display unit 1220 may implement a corresponding communication function.

The electronic device 1200 may include units configured to perform the methods in FIG. 5 and FIG. 9 to FIG. 11. In addition, the units in the electronic device 1200 and the foregoing other operations and/or functions are respectively used to implement corresponding procedures in the method embodiments in FIG. 5 and FIG. 9 to FIG. 11.

Specifically, the electronic device 1200 includes: the processing unit 1210, configured to: in response to a screen splitting operation of a user, split a screen of the electronic device into at least two windows, where the at least two windows include a first window and a second window, and at least one application in a first application running in the first window and a second application running in the second window uses an immersive status bar; the determining unit 1220, further configured to: determine a first color based on the first application, and determine a second color based on the second application; and the display unit 1230, configured to: display a status bar icon within a range of a first area based on the first color, and display a status bar icon within a range of a second area based on the second color, where the first area is an area for displaying a status bar in the first window, and the second area is an area for displaying a status bar in the second window.

In this embodiment of this application, the determining unit 1220 is specifically configured to: determine the first color based on a background color of the first application in the first area, where a difference between the background color of the first application in the first area and the first color is greater than a first preset threshold; or determine the first color based on a color that is of the status bar icon and that is preset for the first application; and determine the second color based on a background color of the second application in the second area, where a difference between the background color of the second application in the second area and the second color is greater than the first preset threshold; or determine the second color based on a color that is of the status bar icon and that is preset for the second application.

In this embodiment of this application, the determining unit 1220 is further configured to determine whether a first grayscale corresponding to the first color and a second grayscale corresponding to the second color are greater than a second preset threshold. The display unit 1230 is specifically configured to: when the first grayscale or the second grayscale is greater than the second preset threshold, display a color of the status bar icon within the first area or the status bar icon within the second area as white; and when the first grayscale or the second grayscale is less than the second preset threshold, display a color of the status bar icon within the range of the first area or the status bar icon within the range of the second area as black.

In this embodiment of this application, the determining unit 1220 is further configured to determine the range of the first area and the range of the second area.

In this embodiment of this application, the first application and the second application are a same application, and an interface displayed in the second window is generated based on an operation performed by the user on an interface of the first window.

In this embodiment of this application, an operating system of the electronic device 1200 may be any one of an Android system, a Windows system, and a Linux system.

FIG. 13 shows another electronic device 1300 according to an embodiment of this application. The electronic device 1300 includes a processor 1320. In this embodiment of this application, the processor 1320 is configured to implement a corresponding control and management operation. For example, the processor 1320 is configured to support the electronic device 1300 in performing the methods, operations, or functions in the foregoing embodiments. Optionally, the electronic device 1300 may further include a memory 1310 and a communication interface 1330. The processor 1320, the communication interface 1330, and the memory 1310 may be connected to each other or connected to each other through a bus 1340. The communication interface 1330 is configured to support the electronic device 1300 in communicating with another device and the like. The memory 1310 is configured to store program code and data of the electronic device 1300. The processor 1320 invokes the code or the data stored in the memory 1310 to implement a corresponding operation. The memory 1310 may or may not be coupled to the processor. The coupling in embodiments of this application may be an indirect coupling or a communication connection between electronic devices, units, or modules in an electrical form, a mechanical form, or another form, and is used for information exchange between the electronic devices, the units, or the modules.

The processor 1320 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication interface 1330 may be a transceiver, a circuit, a bus, a module, or a communication interface of another type. The bus 1340 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

An embodiment of this application further provides a computer-readable medium. The computer-readable medium stores program code. When the computer program code is run on a computer, the computer is enabled to perform steps in the method embodiments in FIG. 5 and FIG. 9 to FIG. 11.

An embodiment of this application further provides a chip, including at least one processor and a memory. The at least one processor is coupled to the memory, and is configured to read and execute instructions in the memory, to perform steps in the method embodiments in FIG. 5 and FIG. 9 to FIG. 11.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, applied to an electronic device, and comprising:
in response to a screen splitting operation of a user, splitting a screen of the electronic device into at least two windows, wherein the at least two windows comprise a first window and a second window, and at least one application in a first application running in the first window and a second application running in the second window uses an immersive status bar;
determining a first color based on the first application, and determining a second color based on the second application; and
displaying a status bar icon within a range of a first area based on the first color, and displaying a status bar icon within a range of a second area based on the second color, wherein the first area is an area for displaying a status bar in the first window, and the second area is an area for displaying a status bar in the second window.

2. The method according to claim 1, wherein
the determining a first color based on the first application comprises:
determining the first color based on a background color of the first application in the first area, wherein a difference between the background color of the first application in the first area and the first color is greater than a first preset threshold; or
determining the first color based on a color that is of the status bar icon and that is preset for the first application; and
the determining a second color based on the second application comprises:
determining the second color based on a background color of the second application in the second area, wherein a difference between the background color of the second application in the second area and the second color is greater than the first preset threshold; or
determining the second color based on a color that is of the status bar icon and that is preset for the second application.

3. The method according to claim 1 or 2, wherein the method further comprises:
determining whether a first grayscale corresponding to the first color and a second grayscale corresponding to the second color are greater than a second preset threshold; and
the displaying a color of the status bar icon within the range of the first area based on the first color, and displaying a color of the status bar icon within the range of the second area based on the second color comprises:
when the first grayscale or the second grayscale is greater than the second preset threshold, displaying the color of the status bar icon within the range of the first area or the status bar icon within the range of the second area as white; and
when the first grayscale or the second grayscale is less than the second preset threshold, displaying the color of the status bar icon within the range of the first area or the status bar icon within the range of the second area as black.

4. The method according to any one of claims 1 to 3, wherein the method further comprises:
determining the range of the first area and the range of the second area.

5. The method according to any one of claims 1 to 4, wherein the first application and the second application are a same application, and an interface displayed in the second window is generated based on an operation performed by the user on an interface of the first window.

6. The method according to any one of claims 1 to 5, wherein an operating system of the electronic device is any one of an Android system, a Windows system, and a Linux system.

7. An electronic device, comprising one or more processors and a memory, wherein the memory comprises instructions, and when the instructions are executed by the one or more processors, the electronic device is enabled to perform the following steps:
in response to a screen splitting operation of a user, splitting a screen of the electronic device into at least two windows, wherein the at least two windows comprise a first window and a second window, and at least one application in a first application running in the first window and a second application running in the second window uses an immersive status bar;
determining a first color based on the first application, and determining a second color based on the second application; and
displaying a color of a status bar icon within a range of a first area based on the first color, and displaying a color of a status bar icon within a range of a second area based on the second color, wherein the first area is an area for displaying a status bar in the first window, and the second area is an area for displaying a status bar in the second window.

8. The electronic device according to claim 7, wherein when the instructions are executed by the one or more processors, the electronic device is enabled to perform the following steps:
determining the first color based on a background color of the first application in the first area, wherein a difference between the background color of the first application in the first area and the first color is greater than a first preset threshold; or
determining the first color based on a color that is of the status bar icon and that is preset for the first application; and
determining the second color based on a background color of the second application in the second area, wherein a difference between the background color of the second application in the second area and the second color is greater than the first preset threshold; or
determining the second color based on a color that is of the status bar icon and that is preset for the second application.

9. The electronic device according to claim 7 or 8, wherein when the instructions are executed by the one or more processors, the electronic device is enabled to perform the following steps:
determining whether a first grayscale corresponding to the first color and a second grayscale corresponding to the second color are greater than a second preset threshold;
when the first grayscale or the second grayscale is greater than the second preset threshold, displaying the color of the status bar icon within the range of the first area or the status bar icon within the range of the second area as white; and
when the first grayscale or the second grayscale is less than the second preset threshold, displaying the color of the status bar icon within the range of the first area or the status bar icon within the range of the second area as black.

10. The electronic device according to any one of claims 7 to 9, wherein when the instructions are executed by the one or more processors, the electronic device is enabled to perform the following step:
determining the range of the first area and the range of the second area.

11. The electronic device according to any one of claims 7 to 10, wherein the first application and the second application are a same application, and an interface displayed in the second window is generated based on an operation performed by the user on an interface of the first window.

12. The electronic device according to any one of claims 7 to 11, wherein an operating system of the electronic device is any one of an Android system, a Windows system, and a Linux system.

13. A computer storage medium, comprising computer instructions, wherein when the computer instructions are run on an electronic device, the electronic device is enabled to perform the display method according to any one of claims 1 to 6.

14. A computer program product, wherein when the computer program product runs on a computer, the computer is enabled to perform the display method according to any one of claims 1 to 6.
